# EUROPÄISCHE PATENTANMELDUNG

(11) **EP 0 867 388 A1**
(43) Veröffentlichungstag der Anmeldung: **30.09.1998**
(21) Anmeldenummer: 98105218.6
(22) Anmeldetag: 23.03.1998
(51) Int. Cl.: B65G 51/32

(54) **Rohrpoststation**

(30) Priorität: 24.03.1997 DE 19712251
(71) Anmelder: Aerocom GmbH & Co. Communicationsystems, 71394 Kernen (DE)
(72) Erfinder: Stangl, Walter, 5020 Salzburg (AT); Stangl, Wilfried, 5020 Salzburg (AT)
(74) Vertreter: Haft, von Puttkamer, Berngruber, Czybulka

(57) **Zusammenfassung**

Eine Rohrpoststation weist eine obere Ebene (1) mit einem oberen Fahrrohranschluß (5) und einer Büchseneingabe (6) sowie eine untere Ebene (2) mit einem unteren Fahrrohranschluß (7) und einem Büchsenauswurf (8) auf, ferner ein erstes Rohrstück (19), das in der Büchsendurchlaufstellung mit dem oberen Fahrrohranschluß (5) und mit dem unteren Fahrrohranschluß (7) verbunden ist. Zwischen der oberen Ebene (1) und der unteren Ebene (2) ist eine Einheit (9) zwischen der Büchsendurchlaufstellung, einer Büchsenempfangsstellung für eine von oben kommende Büchse, einer Büchsenempfangsstellung für eine von unten kommende Büchse, einer Büchseneingabestellung und einer Büchsenauswurfstellung bewegbar angeordnet ist. Ein zweites Rohrstück (21) ist in der Büchsenempfangsstellung für eine von oben kommende Büchse mit dem oberen Fahrrohranschluß (5) verbunden, während sein unteres Ende verschlossen ist. Eine erste Bypass-Leitung (26) ist mit ihrer oberen Öffnung (27) an das zweite Rohrstück (21) angeschlossen und verbindet in der Büchsenempfangsstellung für eine von oben kommende Büchse den oberen Fahrrohranschluß (5) mit dem unteren Fahrrohranschluß (7). Eine zweite Bypass-Leitung (29) verbindet in der Büchsenempfangsstellung für eine von unten kommende Büchse den oberen Fahrrohranschluß (5) mit dem unteren Fahrrohranschluß (7).

## Beschreibung

Die Erfindung bezieht sich auf eine Rohrpoststation nach dem Oberbegriff des Anspruchs 1.

Eine derartige Rohrpoststation ist bereits bekannt (DE 43 12 638 C1). Dabei sind der Büchsenauswurf und die Büchseneingabe an der unteren Platte vorgesehen, an der das untere Fahrrohr angeschlossen ist. Die Bypass-Leitung ist mit ihrem oberen Ende an das obere Fahrrohr angeschlossen.

Die bekannte Rohrpoststation kann nur von oben kommende Büchsen auswerfen. Zwar kann in der Leitung, die die Rohrpoststationen verbindet, die Luftströmungsrichtung auch umgekehrt werden, so dass die Büchsen von unten in die Stationen kommen. Zum Büchsenauswurf muß dann aber die Luftströmungsrichtung umgekehrt werden. D.h., die von unten ankommenden Büchsen müssen zuerst die Station durchfahren, alsdann muß die Büchse gestoppt und die Luftströmung unterbrochen werden und die Rohrpoststation auf Empfang der Büchse von oben eingestellt und die Luftströmungsrichtung umgekehrt werden. Erst dann kann die Büchse in die angesteuerte Station einfahren, um sie dort auszuwerfen. Der Betrieb der bekannten Rohrpoststation erfordert also einen großen Zeit- und Energieaufwand.

Im wesentlichen den gleichen Nachteil weisen die Rohrpoststationen nach AT-PS 385746, DE 88 00 627 U1, DE 90 10 080 U1 und DE 92 01 759 U1 auf, die ebenfalls nur von oben kommende Büchsen empfangen können, bzw. die Rohrpoststation nach CH 671 565 A5, die nur von unten kommende Büchsen empfangen kann.

Aufgabe der Erfindung ist es daher, eine Rohrpoststation zur Verfügung zu stellen, die bei einfachem Aufbau einen problemlosen Betrieb einer Rohrpostanlage mit hoher Sende- und Empfangsfrequenz ermöglicht.

Dies wird erfindungsgemäß mit der im Anspruch 1 gekennzeichneten Rohrpoststation erreicht. In den Unteransprüchen sind vorteilhafte Ausgestaltungen der erfindungsgemäßen Rohrpoststation wiedergegeben.

Mit der erfindungsgemäßen Rohrpoststation können die von unten oder von oben ankommenden Büchsen ohne Abschalten oder Richtungsumkehr der Luftströmung empfangen werden. Dies führt zu einer wesentlichen Einsparung an Zeit und Energie. Mit einer Rohrpostanlage mit den erfindungsgemäßen Rohrpoststationen können daher bei Einsatz einer entsprechenden elektronischen Steuerung mehrere Büchsen in wechselnder Richtung transportiert und bestimmten Stationen zugestellt werden, ohne den Luftstrom abzuschalten oder umzukehren. Die Büchsensende- und Empfangsfrequenz der Rohrpostanlage wird dadurch wesentlich erhöht.

Nachstehend sind Ausführungsformen der erfindungsgemäßen Rohrpoststation sowie eine mit den erfindungsgemäßen Rohrpoststationen versehene Rohrpostanlage beispielhaft anhand der Zeichnung näher erläutert. Darin zeigen:
- Fig. 1 und 2: eine auseinandergezogene perspektivische Darstellung bzw. eine Seitenansicht einer ersten Ausführungsform der Rohrpoststation in der Büchsendurchlaufdrehstellung;
- Fig. 3 und 4: eine auseinandergezogene perspektivische Darstellung bzw. eine Seitenansicht der ersten Ausführungsform in der Büchsenempfangsdrehstellung für eine von oben kommende Büchse;
- Fig. 5 und 6: eine auseinandergezogene perspektivische Darstellung bzw. eine Seitenansicht der ersten Ausführungsform in der Büchsenempfangsdrehstelle für eine von unten kommende Büchse;
- Fig. 7: eine auseinandergezogene perspektivische Darstellung einer zweiten Ausführungsform der Rohrpoststation in der Büchsendurchlaufdrehstellung; und
- Fig. 8: eine schematische Darstellung einer Rohrpostanlage.

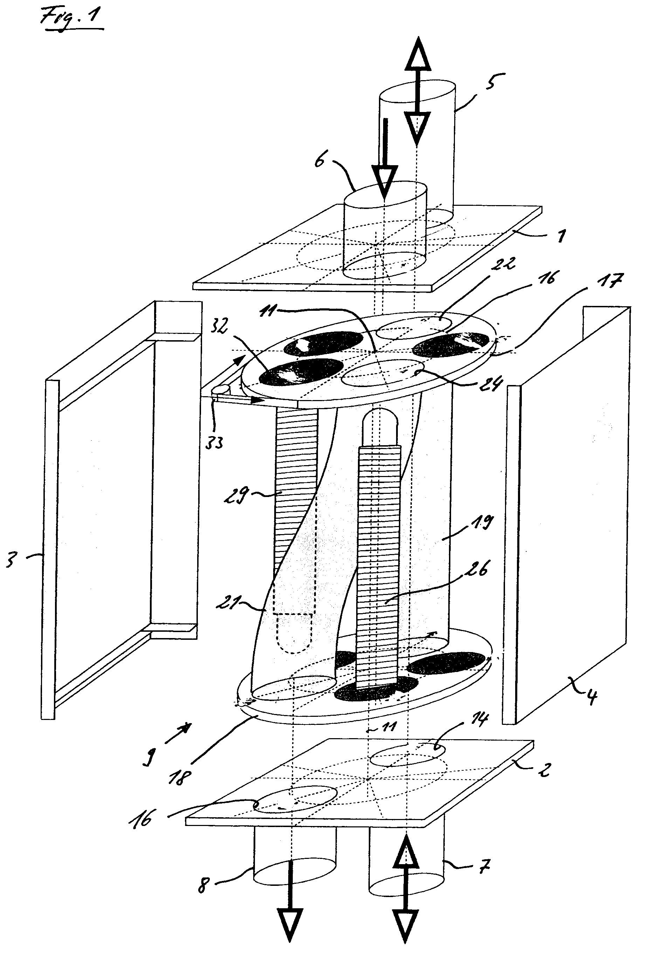

Gemäß Fig. 1 bis 6 weist die Rohrpoststation in einer oberen Ebene eine obere Anschlußplatte 1 und in einer unteren Ebene eine untere Anschlußplatte 2 auf. Die beiden zueinander parallelen Platten 1, 2 sind mit Blechseitenteilen 3, 4 verbunden. Die Platten 1, 2 und die Seitenteile 3, 4 bilden das Gehäuse der Rohrpoststation. Mit einem der beiden Seitenteile 3, 4 kann das Gehäuse beispielsweise an einer Wand befestigt werden.

An die obere Anschlußplatte 1 sind das obere Fahrrohr 5 und die Büchseneingabe 6 angeschlossen, an die untere Anschlußplatte 2 das untere Fahrrohr 7 und der Büchsenauswurf 8.

Zwischen den beiden Anschlußplatten 1, 2 ist eine Einheit 9 um eine Achse 11 drehbar angeordnet. Die Öffnungen 12, 13 für das obere Fahrrohr 5 und die Büchseneingabe 6 in der oberen Anschlußplatte 1 und die Öffnungen 14, 15 für das untere Fahrrohr und den Büchsenauswurf 8 sind auf einem zur Drehachse 11 konzentrischen Kreis 16 angeordnet. Der Winkelabstand der Öffnung 13 der Büchseneingabe 6 von der Öffnung 12 des oberen Fahrrohres 1 beträgt im Uhrzeigersinn 2/5 x 360°, der Winkelabstand der Öffnung 15 für den Büchsenauswurf 8 von der Öffnung 14 für das untere Fahrrohr 7 im Gegenuhrzeigersinn 2/5 x 360°.

Die Einheit 9 weist eine obere scheibenförmige Endplatte 17 und eine dazu parallele scheibenförmige untere Endplatte 18 auf. Zwischen den Endplatten 17 und 18 sind ein zur Drehachse 11 paralleles, erstes Rohrstück 19 und ein S-förmig gebogenes zweites Rohrstück 21 angeordnet. Am oberen Ende des ersten Rohrstücks 19 weist die obere Endplatte 17 eine Öffnung 22 auf, und am unteren Ende des ersten Rohrstücks 19 die untere Endplatte 18 eine Öffnung 23. Ferner weist die obere Endplatte 17 am oberen Ende des zweiten Rohrstücks 21 eine Öffnung 24 und die untere Endplatte 18 am Ende des zweiten Rohrstücks 21 eine untere Öffnung 25 auf. Die Öffnungen 22 bis 25 liegen auf dem Kreis 16. Während die Öffnungen 22 und 23 miteinander fluchten, ist die Öffnung 25 gegenüber der Öffnung 24 im Uhrzeigersinn um 1/5 x 360° versetzt.

An den oberen Bereich des zweiten Rohrstücks 21 ist eine erste Bypass-Leitung 26 angeschlossen. Die obere Öffnung 27 der ersten Bypass-Leitung 26, die in das zweite Rohrstück 21 mündet, ist in einem Abstand von der Öffnung 25 am unteren Ende des zweiten Rohrstücks 21 angeordnet, der größer ist als die Länge einer Rohrpostbüchse. Das untere Ende der ersten Bypass-Leitung 26 ist an eine Öffnung 28 in der unteren Endplatte 18 angeschlossen. Die Öffnung 28 ist ebenso wie die Öffnung 24 am oberen Ende des zweiten Rohrstücks 21 im Uhrzeigersinn vom ersten Rohrstück 19 in einem Winkel von 2/5 x 360° versetzt angeordnet.

An dem unteren Bereich des zweiten Rohrstücks 21 ist eine zweite Bypass-Leitung 29 angeschlossen. Die untere Öffnung 30 der zweiten Bypass-Leitung 29 ist dabei in einem Abstand von der Öffnung 24 am oberen Ende des zweiten Rohrstücks 21 angeordnet, der größer ist als die Länge einer Rohrpostbüchse. Das obere Ende der zweiten Bypass-Leitung 29 ist an eine Öffnung 32 in der oberen Endplatte 17 angeschlossen. Die Öffnung 32 ist ebenso wie die Öffnung 25 am unteren Ende des zweiten Rohrstücks 21 im Gegenuhrzeigersinn vom ersten Rohrstück 19 in einem Winkel von 2/5 x 360° versetzt angeordnet.

Die drehbare Einheit 9 wird durch einen Motor 33 angetrieben, der beispielsweise über eine entsprechende Transmission mit der Scheibe 17 zusammenwirkt.

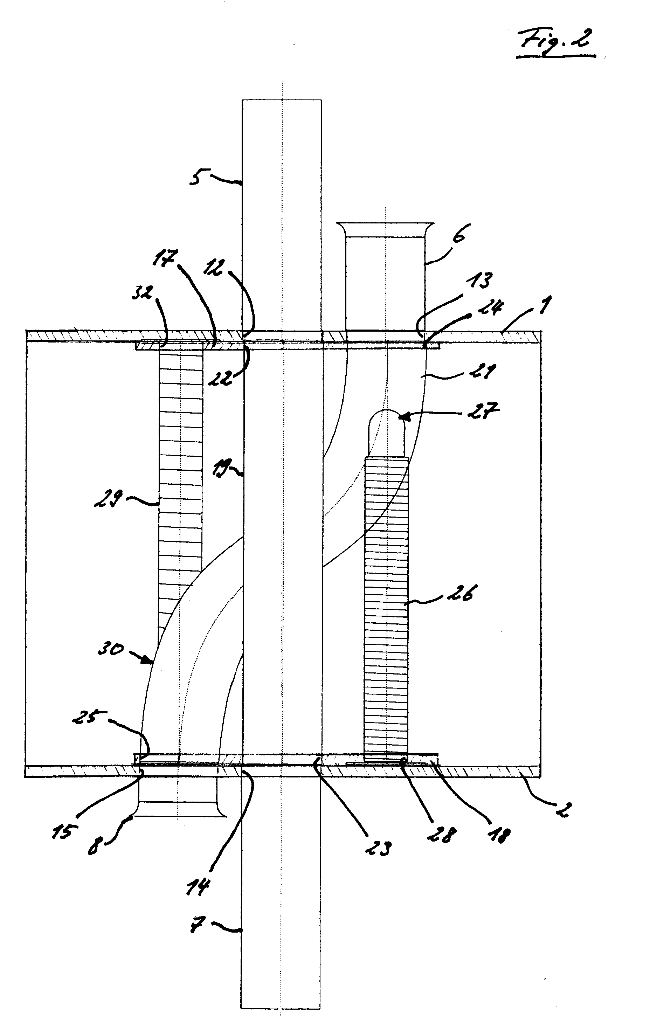

In der in Fig. 1 und 2 dargestellten Büchsendurchlaufdrehstellung der Einheit 9 ist das obere Fahrrohr 5 über das erste Rohrstück 19 mit dem unteren Fahrrohr 7 verbunden. Demgegenüber ist das zweite Rohrstück 21 in der Büchsendurchlaufdrehstellung gemäß Fig. 1 mit seinem oberen Ende mit der Büchseneingabe 6 und mit seinem unteren Ende mit dem Büchsenauswurf 8 verbunden. Desgleichen ist die untere Öffnung 28 der Bypass-Leitung 26 in der Durchlaufdrehstellung durch die untere Anschlußplatte 2 luftdicht verschlossen.

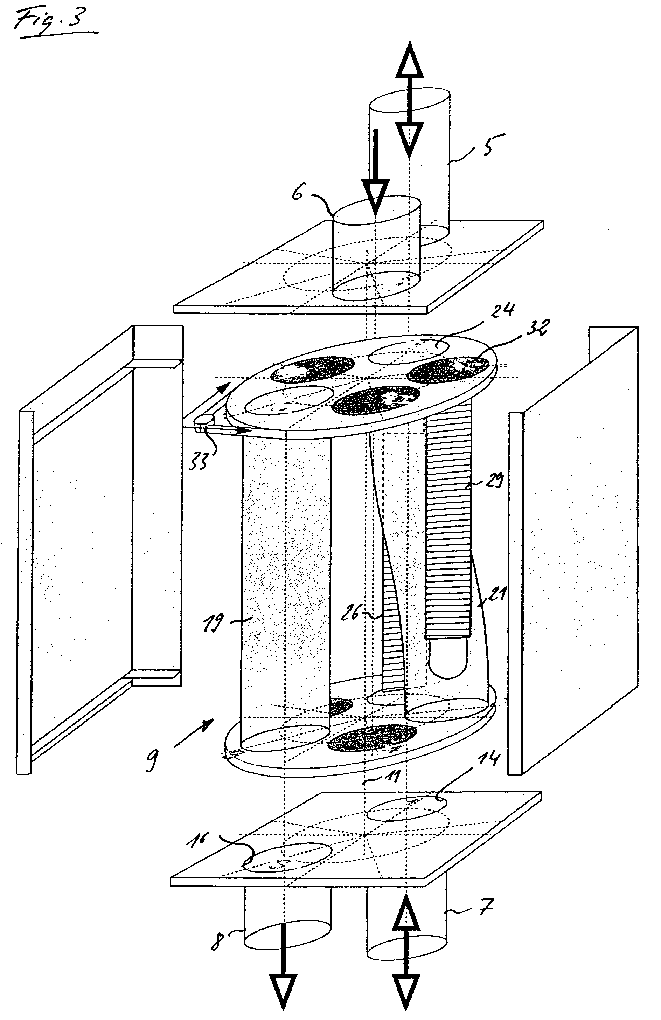

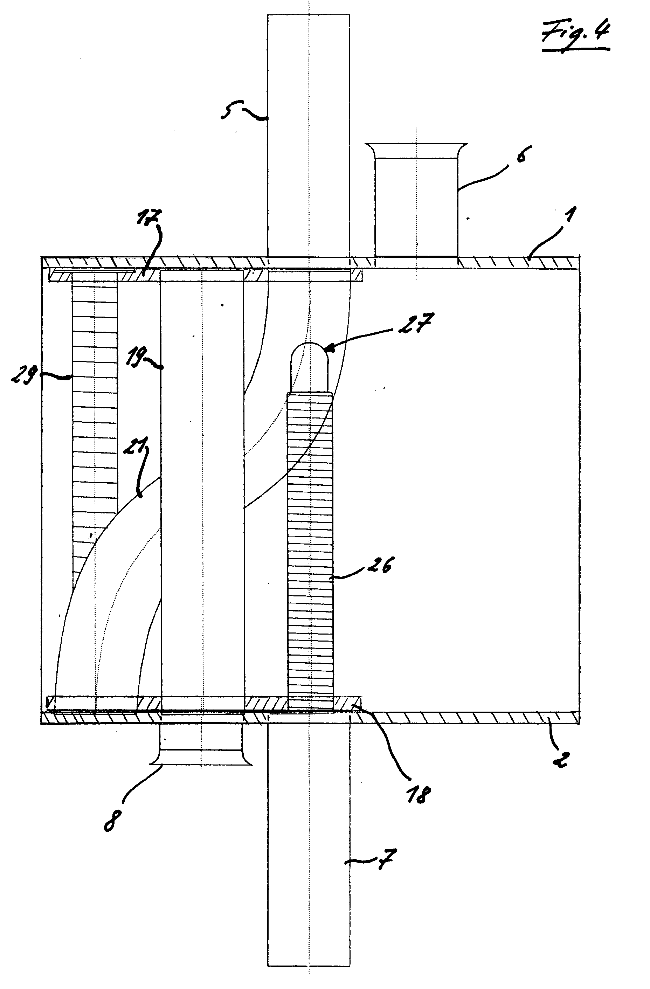

Zum Empfang einer Rohrpostbüchse von oben wird die Einheit 9 mit dem Motor 33 von der in Fig. 1 dargestellten Durchlaufdrehstellung im Gegenuhrzeigersinn um 2/5 x 360° gedreht. Damit ist in der in Fig. 3 und 4 dargestellten Büchsenempfangsdrehstellung für eine von oben kommende Büchse das obere Ende des zweiten Rohrstücks 21 mit dem oberen Fahrrohr 5 verbunden, während das untere Ende des zweiten Rohrstücks 21 durch die untere Anschlußplatte 2 luftdicht verschlossen ist. Die erste Bypass-Leitung 26 ist mit ihrem unteren Ende mit dem unteren Fahrrohr 7 verbunden, während das obere Ende der zweiten Bypass-Leitung 29 durch die obere Anschlußplatte 2 luftdicht verschlossen ist.

Eine von oben kommende Rohrpostbüchse wird damit in das zweite Rohrstück 2 umgeleitet. Da die erste Bypass-Leitung 26 im Abstand von der unteren Anschlußplatte 2 angeordnet ist, führt die von oben kommende Büchse nach Passieren der Öffnung 27 zu einer Komprimierung der Luft zwischen der Büchse und der unteren Anschlußplatte 2 in dem zweiten Rohrstück 21. Dadurch wird die Büchse abgebremst. Zugleich stellt die erste Bypass-Leitung 26 sicher, dass in der Büchsenempfangsdrehstellung für eine von oben kommende Büchse der Luftstrom in der Rohrpostleitung nicht unterbrochen wird.

In der in Fig. 3 und 4 dargestellten Büchsenempfangsdrehstellung für eine von oben kommende Büchse wird also die Einheit 9 von der in Fig. 1 und 2 dargestellten Büchsendurchlaufdrehstellung um 2/5 x 360° im Gegenuhrzeigersinn gedreht. Die Büchse fährt damit über das Fahrrohr 5 in das zweite Rohrstück 21 von oben ein und steht dann unten auf der unteren Anschlußplatte 2 auf, wobei die Förderluft über die erste Bypass-Leitung 26 vom oberen Bereich des zweiten Rohrstücks 21 in das untere Fahrrohr 7 strömt und damit die Luft weiterführt.

Zum Auswerfen der von oben empfangenen Büchse wird die Einheit 9 mit dem Motor 33 von der in Fig. 3 und 4 dargestellten Drehstellung in die Büchsendurchlaufdrehstellung gemäß Fig. 1 und 2 zurückgedreht, wodurch das untere Ende des zweiten Rohrstücks 21 mit dem Büchsenauswurf 8 verbunden wird.

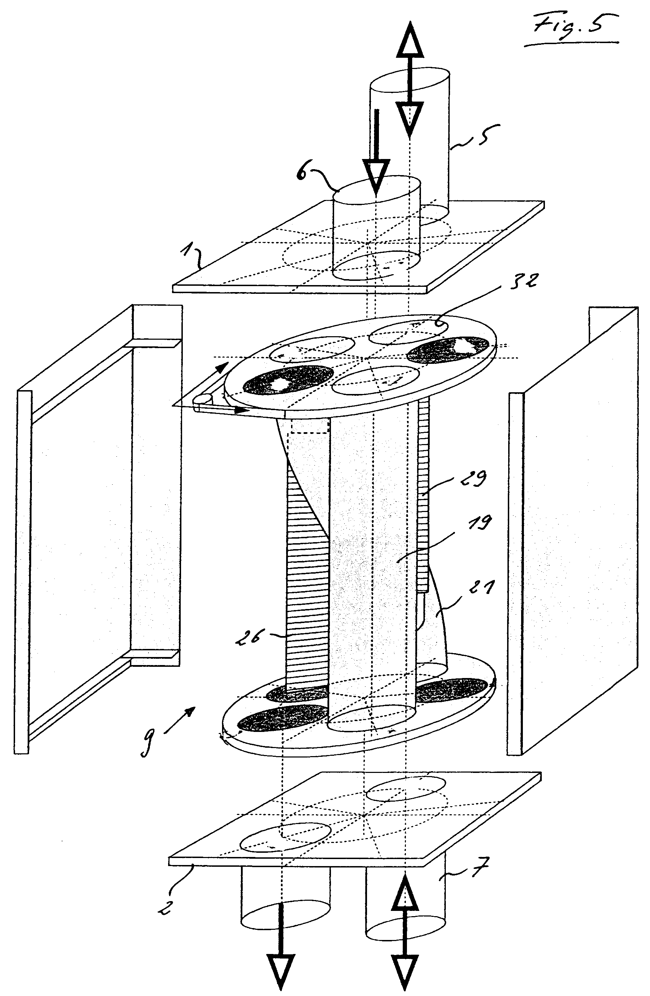

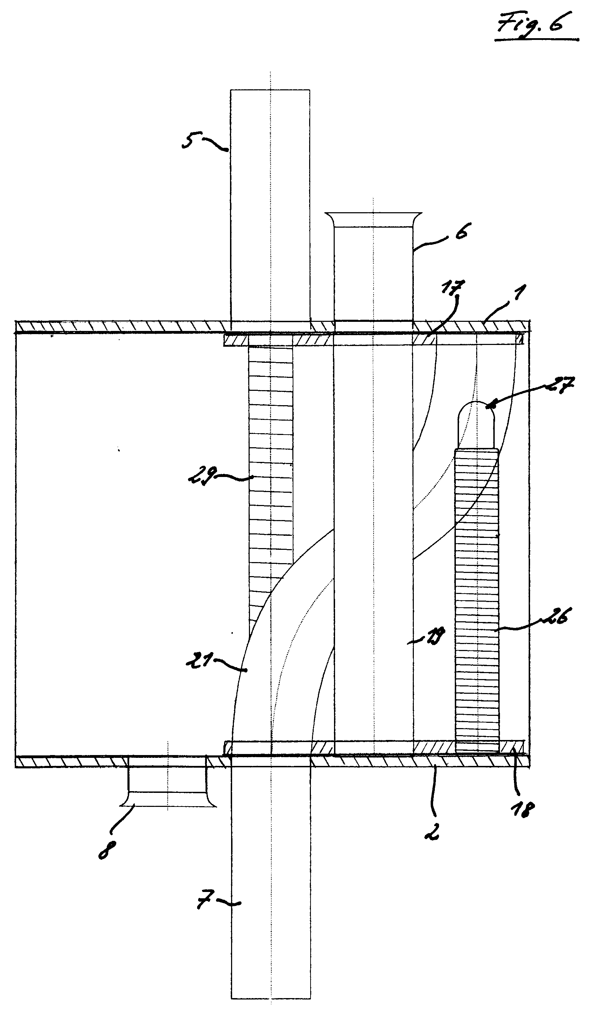

Zum Empfang einer Rohrpostbüchse von unten wird die Einheit 9 mit dem Motor 33 im Gegenuhrzeigersinn von der in Fig. 1 und 2 dargestellten Büchsendurchlaufdrehstellung um 3/5 x 360° gedreht. Damit ist in der in Fig. 5 und 6 dargestellten Büchsenempfangsdrehstellung für eine von unten kommende Büchse das untere Ende des zweiten Rohrstücks 21 mit dem unteren Fahrrohr 7 verbunden, während das obere Ende des zweiten Rohrstücks 21 durch die obere Anschlußplatte 1 luftdicht verschlossen, die zweite Bypass-Leitung 29 mit seinem oberen Ende mit dem oberen Fahrrohr 5 verbunden, das untere Ende der ersten Bypass-Leitung 26 durch die untere Abschlußplatte 2 luftdicht verschlossen und das erste Rohrstück 19 durch die obere Anschlußplatte 1 und die untere Anschlußplatte 2 luftdicht verschlossen ist.

Eine von unten kommende Rohrpostbüchse wird damit in das zweite Rohrstück 21 umgeleitet, da die zweite Bypass-Leitung 29 in einem entsprechenden Abstand von der oberen Anschlußplatte 1 angeordnet ist, führt die von unten kommende Büchse nach Passieren der Öffnung 30 zu einer Komprimierung der Luft zwischen der Büchse und der oberen Anschlußplatte 1 in dem zweiten Rohrstück 21, wodurch die Büchse abgebremst wird. Zugleich stellt die zweite Bypass-Leitung 29 sicher, daß in der Empfangsdrehstellung für eine von unten kommende Büchse der Luftstrom in der Rohrpostleitung nicht unterbrochen wird.

Zum Auswerfen der von unten empfangenen Büchse wird die Einheit 9 mit dem Motor 23 in die Büchsendurchlaufdrehstellung gemäß Fig. 1 und 2 zurückgedreht, wodurch das untere Ende des zweiten Rohrstücks 21 mit dem Büchsenauswurf 8 verbunden wird.

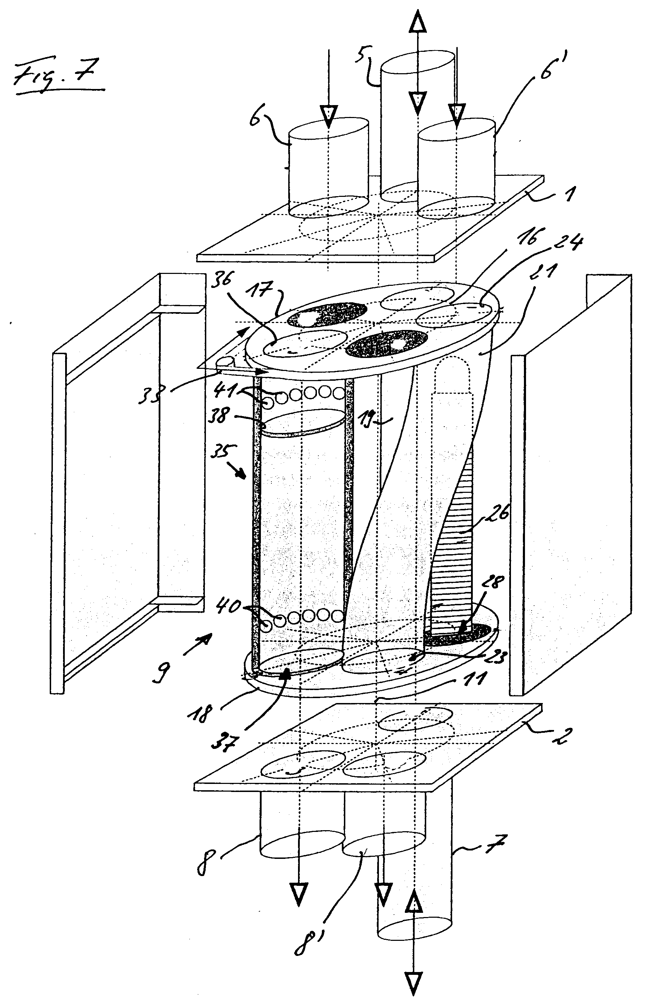

Bei der in Fig. 7 dargestellten zweiten Ausführungsform ist die zweite Bypass-Leitung an einem dritten, zur Drehachse 11 parallelen, geraden Rohrstück 35 vorgesehen, welches mit seinem oberen Ende an eine Öffnung 36 in der oberen Endplatte 17 und mit seinem unteren Ende an eine Öffnung 37 in der unteren Endplatte 18 angeschlossen ist.

Zur Bildung des zweiten Bypass ist das dritte Rohrstück 35 als Doppelmantelrohr ausgebildet. In einem Abstand von der unteren Anschlußplatte 2, der größer ist als die Länge einer Büchse, ist an der Innenwand des zweiten Rohrstücks 35 ein plattenförmiger oder dergleichen luftundurchlässiger Anschlag 38 vorgesehen. Die Bypass-Leitung wird durch den Hohlraum in dem als Doppelmantelrohr ausgebildeten dritten Rohrstück 35 gebildet. Dazu sind beiderseits des Anschlags 38 in der Innenwand des Doppelmantelrohres 35 Öffnungen 40, 41 vorgesehen. Die unteren Öffnungen 40 sind dabei in einem Abstand von dem Anschlag 38 angeordnet, der größer als die Lange der Büchse ist.

Die obere Öffnung 36 in der oberen Endplatte 17 und die untere Öffnung 37 in der unteren Endplatte 18 für das dritte Rohrstück 35 sind ebenfalls auf dem Kreis 16 angeordnet.

Gegenüber dem ersten Rohrstück 19 ist im Uhrzeigersinn die obere Öffnung 24 in der oberen Endplatte 17 des zweiten Rohrstücks 21 um 1/5 x 360° und die obere Öffnung 36 in der oberen Endplatte 17 des dritten Rohrstücks 35 um 3/5 x 360° versetzt, während die untere Öffnung 23 des zweiten Rohrstücks 21 in der unteren Endplatte 18 um 2/3 x 360° und die untere Öffnung 28 in der ersten Bypass-Leitung 26 um 1/5 x 360° gegenüber dem ersten Rohrstück 19 versetzt sind.

Die Rohrpoststation nach Fig. 7 weist gegenüber der nach Fig. 1 bis 6 eine zweite Büchseneingabe 6' an der oberen Anschlußplatte 1 und einen zweiten Büchsenauswurf 7 an der unteren Anschlußplatte 2 auf. Die beiden Büchseneingabeeinrichtungen 6 und 6' und die beiden Büchsenauswurfeinrichtungen 8 und 8' sind wie das obere Fahrrohr 5 und das untere Fahrrohr 7 auf dem Kreis 16 angeordnet. Die beiden Büchseneingabeeinrichtungen 6 und 6' sind gegenüber dem oberen Fahrrohr 5 um einen Winkel von 1/5 x 360° im Uhrzeigersinn bzw. Gegenuhrzeigersinn angeordnet. Die beiden Auswurfeinrichtungen 8 und 8' sind gegenüber dem unteren Fahrrohr 7 um einen Winkel von 2/5 x 360° im Gegenuhrzeigersinn bzw. im Uhrzeigersinn angeordnet.

In dem zweiten Rohrstück 21 ist wenigstens ein nicht dargestellter Sensor angeordnet, der den Empfang einer Büchse anzeigt. Desgleichen weist das dritte Rohrstück 35 einen nicht dargestellten Sensor für den Empfang einer Büchse auf. Die Sensoren sind an eine nicht dargestellte Steuereinrichtung angeschlossen, die den Motor 33 steuert. Ferner kann in der Büchseneingabe 6 und der Büchseneingabe 6' ein an die Steuereinheit angeschlossener Sensor vorgesehen sein.

Nach den in der Zeichnung dargestellten Ausführungsformen ist die Einheit 9 drehbar ausgebildet. Wie insbesondere die Seitenansicht nach Fig. 2, 4 und 6 zeigt, kann die Einheit 9 jedoch auch in anderer Weise zwischen den Anschlußplatten 1 und 2 bewegbar z.B. hin- und her, verschiebbar ausgebildet sein.

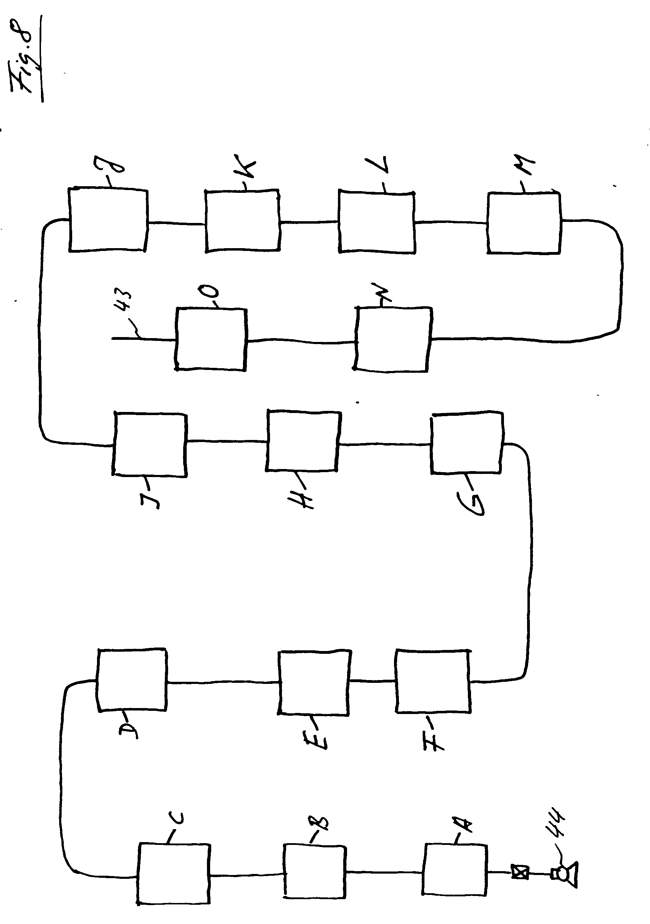

Gemäß Fig. 8 weist eine Rohrpostanlage eine Vielzahl von erfindungsgemäßen Stationen A bis O auf. An das eine Ende der Leitung 43 ist ein Gebläse 44 angeschlossen, dass auf Saug- und Druckbetrieb geschaltet werden kann, um die Anlage im Wendebetrieb zu fahren.

Damit können eine Vielzahl von Büchsentransportbewegungen mit mehreren Büchsen in kurzer Zeit von beliebigen Stationen A bis O zu beliebigen Stationen A bis 0 in kurzer Zeit durchgeführt werden, insbesondere wenn eine elektrische Steuereinrichtung für eine optimale Durchführung der einzelnen Büchsentransportbewegungen vorgesehen ist.

So kann beispielsweise bei Saugbetrieb des Gebläses 44 eine Büchse von der Station O zur Station N, eine Büchse von der Station M zur Station I, eine Büchse von der Station H zur Station E und eine weitere Büchse von der Station C zur Station B transportiert werden, und nach Umschalten auf Druckbetrieb des Gebläses 44 eine Büchse von der Station D zur Station F, eine Büchse von der Station G zur Station J und eine weitere Büchse von der Station K zur Station N.

## Patentansprüche

1. Rohrpoststation, die eine obere Ebene mit einem oberen Fahrrohranschluß und eine untere Ebene mit einem unteren Fahrrohranschluß und wenigstens einem Büchsenauswurf, wenigstens eine Büchseneingabe, ein erstes Rohrstück, das in der Büchsendurchlaufstellung mit seiner oberen Öffnung mit dem oberen Fahrrohranschluß und mit seiner unteren Öffnung mit dem unteren Fahrrohranschluß verbunden ist, und eine Bypass-Leitung, die in der Büchsenempfangsstellung für eine von oben kommende Büchse den oberen Fahrrohranschluß mit dem unteren Fahrrohranschluß verbindet, aufweist, dadurch gekennzeichnet, dass die Büchseneingabe (6, 6') an der oberen Ebene angeordnet ist, zwischen der oberen Ebene und der unteren Ebene eine Einheit (9) zwischen der Büchsendurchlaufstellung, der Büchsenempfangsstellung für eine von oben kommende Büchse, einer Büchsenempfangsstellung für eine von unten kommende Büchse, einer Büchseneingabestellung und einer Büchsenauswurfstellung bewegbar angeordnet ist, ein zweites Rohrstück (21) vorgesehen ist, dessen obere Öffnung (24) in der Büchsenempfangsstellung für eine von oben kommende Büchse mit dem oberen Fahrrohranschluß (5) verbunden und dessen untere Öffnung (25) in der Büchsenempfangsstellung für eine von oben kommende Büchse verschlossen ist, die erste Bypass-Leitung (26) mit ihrer oberen Öffnung (27) an das zweite Rohrstück (21) in einem Abstand von der unteren Öffnung (25) des zweiten Rohrstücks (21) angeordnet ist, der größer ist als die Länge einer Büchse, und eine zweite Bypass-Leitung (29) vorgesehen ist, die in der Büchsenempfangsstellung für eine von unten kommende Büchse den oberen Fahrrohranschluß (5) mit dem unteren Fahrrohranschluß (7) verbindet.

2. Rohrpoststation nach Anspruch 1, dadurch gekennzeichnet, dass in der Büchseneingabestellung das erste Rohrstück (19) mit seiner oberen Öffnung (22) mit der Büchseneingabe (6) verbunden und die untere Öffnung (23) des ersten Rohrstücks (19) verschlossen ist.

3. Rohrpoststation nach einem der vorstehenden Ansprüche, dadurch gekennzeichnet, dass die erste Bypass-Leitung (26) in der Büchsenempfangsstellung für eine von oben kommende Büchse mit dem unteren Fahrrohranschluß (7) verbunden ist.

4. Rohrpoststation nach einem der vorstehenden Ansprüche, dadurch gekennzeichnet, dass die zweite Bypass-Leitung (29) in der Büchsenempfangsstellung für eine von unten kommende Büchse mit dem oberen Fahrrohranschluß (5) verbunden ist.

5. Rohrpoststation nach einem der vorstehenden Ansprüche, dadurch gekennzeichnet, dass die obere Ebene durch eine obere Anschlußplatte (1) für den oberen Fahrrohranschluß (5) und die Büchseneingabe (6, 6') und die untere Ebene durch eine untere Anschlußplatte (2) für den unteren Fahrrohranschluß (7) und den Büchsenauswurf (8, 8') gebildet sind.

6. Rohrpoststation nach einem der vorstehenden Ansprüche, dadurch gekennzeichnet, dass das zweite Rohrstück (21) mit seiner oberen Öffnung (24), die Büchsenempfangsstellung für eine von oben kommende Büchse ausgenommen, luftdicht an der oberen Anschlußplatte (1) und mit seiner unteren Öffnung (25), die Büchsenauswurfstellung und die Büchsenempfangsstellung für eine von unten kommende Büchse ausgenommen, luftdicht an der unteren Anschlußplatte (2) anliegt.

7. Rohrpoststation nach einem der vorstehenden Ansprüche, dadurch gekennzeichnet, dass die erste Bypass-Leitung (26), die Büchsenempfangsstellung für eine von oben kommende Büchse ausgenommen, mit seiner unteren Öffnung (28) luftdicht an der unteren Anschlußplatte (2) anliegt.

8. Rohrpoststation nach einem der vorstehenden Ansprüche, dadurch gekennzeichnet, dass die zweite Bypass-Leitung (29), die Büchsenempfangsstellung für eine von unten kommende Büchse ausgenommen, mit seiner oberen Öffnung (36) luftdicht an der oberen Anschlußplatte (1) anliegt.

9. Rohrpoststation nach einem der vorstehenden Ansprüche, dadurch gekennzeichnet, dass die Einheit (9) eine obere Endplatte (17) und eine untere Endplatte (18) aufweist, an denen das erste Rohrstück (19) und das zweite Rohrstück (21) mit ihrer oberen Öffnung (20, 24) und ihrer unteren Öffnung (23, 25) befestigt sind.

10. Rohrpoststation nach Anspruch 9, dadurch gekennzeichnet, dass die erste Bypass-Leitung (26) mit ihrer unteren Öffnung (28) an der unteren Endplatte (18) befestigt ist.

11. Rohrpoststation nach einem der vorstehenden Ansprüche, dadurch gekennzeichnet, dass die zweite Bypass-Leitung (29) mit ihrer unteren Öffnung (30) an das zweite Rohrstück (21) in einem Abstand von der oberen Öffnung (24) des zweiten Rohrstücks (21) angeordnet ist, der größer ist als die Länge einer Büchse.

12. Rohrpoststation nach Anspruch 11, dadurch gekennzeichnet, dass die zweite Bypass-Leitung (29), die Büchsenempfangsstellung für eine von unten kommende Büchse ausgenommen, mit ihrer oberen Öffnung (32) luftdicht an der oberen Anschlußplatte (1) anliegt.

13. Rohrpoststation nach einem der vorstehenden Ansprüche, dadurch gekennzeichnet, dass das erste Rohrstück (19) gerade ausgebildet ist.

14. Rohrpoststation nach einem der vorstehenden Ansprüche, dadurch gekennzeichnet, dass das zweite Rohrstück (21) S-förmig gebogen ausgebildet ist.

15. Rohrpoststation nach einem der vorstehenden Ansprüche, dadurch gekennzeichnet, dass die zweite Bypass-Leitung (29) mit ihrer oberen Öffnung (32) an der oberen Endplatte (17) der Einheit (9) befestigt ist.

16. Rohrpoststation nach einem der vorstehenden Ansprüche, dadurch gekennzeichnet, dass das zweite Rohrstück (21) wenigstens einen Sensor für eine ankommende Büchse aufweist.

17. Rohrpoststation nach einem der vorstehenden Ansprüche, dadurch gekennzeichnet, dass die zweite Bypass-Leitung an einem dritten Rohrstück (35) vorgesehen ist, welches in der Büchsenempfangsstellung für eine von unten kommende Büchse mit seiner oberen Öffnung (36) mit dem oberen Fahrrohranschluß (5) und mit seiner unteren Öffnung (37) mit dem unteren Fahrrohranschluß (7) verbunden ist und einen Anschlag (38) für die Büchse in einem Abstand von seiner unteren Öffnung (37) aufweist, der größer als die Länge der Büchse ist, wobei die zweite Bypass-Leitung die beiden Abschnitte des dritten Rohrstücks (35) beiderseits des Anschlags (38) miteinander verbindet und die untere Öffnung (40) der Bypass-Leitung von dem Anschlag (38) in einem Abstand angeordnet ist, der größer als die Länge der Büchse ist.

18. Rohrpoststation nach Anspruch 19, dadurch gekennzeichnet, dass die zweite Bypass-Leitung und das dritte Rohrstück (35) durch ein Doppelmantelrohr gebildet werden, wobei das Innenrohr beiderseits des Anschlags (38) jeweils eine Öffnung (40, 41) in den Mantelhohlraum des Doppelmantelrohres aufweist.

19. Rohrpoststation nach einem der vorstehenden Ansprüche, dadurch gekennzeichnet, dass das dritte Rohrstück (35), die Büchsenempfangsstellung für eine von unten kommende Büchse und die Büchsenauswurfstellung ausgenommen, mit seiner unteren Öffnung (37) luftdicht an der unteren Anschlußplatte (2) und, die Büchsenempfangsstellung für eine von unten kommende Büchse ausgenommen, mit seiner oberen Öffnung (36) luftdicht an der oberen Anschlußplatte (1) anliegt.

20. Rohrpoststation nach einem der vorstehenden Ansprüche, dadurch gekennzeichnet, dass das dritte Rohrstück (35) mit seiner oberen Öffnung (36) an der oberen Endplatte (17) und mit seiner unteren Öffnung (37) an der unteren Endplatte (18) der Einheit (9) befestigt ist.

21. Rohrpoststation nach einem der Ansprüche 17 bis 20, dadurch gekennzeichnet, dass das dritte Rohrstück (35) gerade ausgebildet ist.

22. Rohrpoststation nach einem der vorstehenden Ansprüche, dadurch gekennzeichnet, dass die Einheit (9) drehbar ausgebildet ist und der obere Fahrrohranschluß (5), der untere Fahrrohranschluß (7), die Büchseneingabe (6, 6'), der Büchsenauswurf (8, 8'), die obere Öffnung (22) und die untere Öffnung (23) des ersten Rohrstücks (19), die obere Öffnung (24) und die untere Öffnung (25) des zweiten Rohrstücks und die untere Öffnung (28) der ersten Bypass-Leitung (26) auf einem Kreis (16) angeordnet sind.

23. Rohrpoststation nach Anspruch 22, dadurch gekennzeichnet, dass die obere Öffnung (32) der zweiten Bypass-Leitung (29) auf dem Kreis (16) angeordnet ist.

24. Rohrpoststation nach Anspruch 23, dadurch gekennzeichnet, dass die obere Öffnung (36) und die untere Öffnung (37) des dritten Rohrstücks (35) auf dem Kreis (16) angeordnet ist.
